# EUROPÄISCHE PATENTSCHRIFT

(11) **EP 2 887 849 B1**
(45) Veröffentlichungstag und Bekanntmachung des Hinweises auf die Patenterteilung: **14.08.2019**
(21) Anmeldenummer: 13739413.6
(22) Anmeldetag: 17.07.2013
(51) Int. Cl.: A47J 43/10, A47J 43/07

(54) **ROTOR MIT FREILAUF**
ROTOR HAVING FREEWHEEL
ROTOR À ROUE LIBRE

(30) Priorität: 24.07.2012 CH 12342012
(43) Veröffentlichungstag der Anmeldung: 01.07.2015
(73) Patentinhaber: Groupe SEB Schweiz GmbH, 8152 Glattpark (Opfikon) (CH)
(72) Erfinder: RIEDE, Hans-Jürgen, 3250 Lyss (CH)
(74) Vertreter: Rentsch Partner AG
(86) Internationale Anmeldenummer: PCT/EP2013/065102
(87) Internationale Veröffentlichungsnummer: WO 2014/016183

(56) Entgegenhaltungen:
- WO-A1-2007/128153
- CN-U- 202 224 113
- JP-A- 2011 045 411
- US-A1- 2009 045 274

## Beschreibung

### TECHNISCHES GEBIET

Die Erfindung bezieht sich auf einen Wirkeinsatz mit Bearbeitungsmitteln zum Bearbeiten von Lebensmitteln in einem Bearbeitungsgerät und ein Gerät zum Bearbeiten von Lebensmitteln mit einem solchen Wirkeinsatz.

### STAND DER TECHNIK

Aus dem Stand der Technik sind Rotoren für handbetriebene Geräte zum Bearbeiten von Lebensmitteln bekannt, die verschiedene Bearbeitungsmittel zum Beispiel zum Schneiden, Schälen, Pürieren oder Schleudern von Obst, Gemüse und Kräutern tragen. Einige dieser Geräte können mit speziellen Bearbeitungsmitteln versehen auch zum Kneten von Teig, zum Mischen von Saucen oder zum Schlagen von Sahne verwendet werden. Angetrieben werden diese Geräte meist mittels Kurbel-, Schnurzug-, Kniehebel- oder Brummkreisel-Antrieben.

Aus der US5156084A ist eine manuell betriebene Küchenmaschine bekannt, die einen Arbeitsbehälter mit einer zentralen Stützachse, einen Deckel mit Handkurbelantrieb und einer Anzahl von verschiedenen auswechselbaren Rotoren mit Bearbeitungsmitteln umfasst. Neben einem Schleuderkorb zum Abtropfen von Salat sind ein Schneidrotor mit einer Mehrzahl von radial befestigten Schneidmessern und ein Mischrotor mit ebenfalls radial angeordneten Rührflügeln vorgeschlagen. Die verschiedenen Rotoren werden jeweils auf einen zentralen Lagerzapfen im Arbeitsbehälter aufgesteckt und beim Aufsetzen des Deckels auf den Arbeitsbehälter über eine formschlüssige Werkzeugschnittstelle mit dem Kurbelantrieb im Deckel lösbar verbunden. Die Drehbewegung der Kurbel wird über ein Übersetzungsgetriebe auf eine zentrale Antriebsachse übertragen, die den Boden des Deckels durchsetzt und am unteren Ende mit einem Anschlusszapfen mit einem Aussenvierkant versehen ist. Je nach gewünschter Lebensmittelbearbeitung können die Rotoren sehr schnell und einfach ausgewechselt werden. Durch den vorgeschlagenen Kurbelantrieb werden die Drehbewegungen übersetzt auf den Rotor übertragen, so dass die Drehzahl des Rotors wesentlich höher ist als die Drehzahl der Kurbel. Die direkte Verbindung erlaubt es den jeweils eingesetzten Rotor in Abhängigkeit von der Drehrichtung der Kurbel wahlweise in verschiedene Richtungen zu drehen. Solche Drehrichtungsänderungen sind besonders gewünscht beim Rühren oder Emulgieren von Saucen oder beim Schleudern von Salat oder Kräutern. Beim Einsatz des Schneidrotors müssen die Schneidmesser beidseitig mit einer Schneide versehen sein um das Blockieren bei einer Drehrichtungsänderung zu verhindern. Die angewinkelte Messerstellung hat sich jedoch zudem als ungünstig für den Betrieb in beide Drehrichtungen erwiesen.

Der einfache Aufbau, die geringen Herstellungskosten und der netzunabhängige Betrieb machen solche manuell betriebenen Küchenmaschinen nicht nur in Schwellenländern, sondern auch in Industrieländern zu beliebten Küchengeräten.

Um das Schneiden von Obst und Gemüse insbesondere zu Beginn des Schneidvorgangs zu erleichtern ist in der WO11157511A ein Wirkeinsatz für Lebensmittel verarbeitende Geräte vorgeschlagen. Diese Geräte umfassen eine Arbeitsschüssel und eine, um eine Rotationsachse rotierend angetriebene Aufnahme für den Wirkeinsatz. Dieser rotierende Wirkeinsatz ist derart ausgebildet, dass in der Arbeitsschüssel befindliche Lebensmittel be- und/oder verarbeitet werden können, wobei der Wirkeinsatz einen mit der Aufnahme verbindbaren oder verbundenen Tragkörper und zumindest ein, an dem Tragkörper gelagertes und infolge der durch die Be- und/oder Verarbeitung bewegliches Werkzeug aufweist, das gegen die Kraft eines Rückstellmittels von einer Ruheposition in eine Arbeitsposition verlagerbar ist.

Die aus der US 2009/0090254 A1 bekannte Vorrichtung zum Schneiden von Lebensmitteln behebt den Nachteil vorbekannter Vorrichtungen, dass bei diesen insbesondere bei harten Lebensmitteln, etwa in Form von Zwiebeln oder Kartoffeln ein vergleichsweise grosses Anfangsdrehmoment aufgebracht werden muss, um die grossformatigen, harten Stücke in leichter zu verarbeitende, kleinere Stücke zu zerlegen. Um dies zu vermeiden, sind an der zentralen Rotorachse schwenkbewegliche Messer angeordnet, die in Abhängigkeit vom Drehmoment, das als Reaktion auf das von Aussen aufgebrachte Antriebsmoment entsteht, von einer Ruheposition um einen begrenzten Schwenkwinkel verschwenkbar in eine Arbeitsposition bringbar sind. Bei der bekannten Vorrichtung der Anmelderin, die unter der Marke SWIZZZPROZZZ® äusserst erfolgreich vermarktet werden, sind übereinander zwei oder mehr Messer angeordnet, die relativ zueinander verschwenkbar sind und um die gemeinsame Rotationsachse herum angetrieben werden. In Ruheposition sind die Messer in einer Winkelstellung übereinander deckungsgleich. Mindestens eines der Messer ist allerdings schwenkbaren auf der Antriebsachse gelagert, so dass in Folge des Anfangsdrehmomentes dieses Messer zunächst nachgeben kann, bis es einen Anschlag erreicht hat, an dem es dann ebenfalls drehangetrieben wird. Auf diese Weise kann das zu Beginn der Bearbeitung anliegende Drehmoment abgesenkt werden, da nicht alle Messer sofort schneidend mit dem Schneidgut in Eingriff kommen.

Ein Nachteil der bekannten Vorrichtung besteht - wie bereits in der WO11157511A angemerkt wird - allerdings darin, dass der Winkel, um den die Messer frei schwenkbar gelagert sind, begrenzt und vergleichsweise klein ist.

Aus der WO10150263 A2 sind Einsätze für Küchenmaschine bekannt die zum Zerkleinern, Mischen, Rühren, Schlagen und Entsaften eingesetzt werden können. Ein zentraler Schaft kann mittels einer an einem ersten Ende angeordneten Spindel an einen Antriebsmotor angeschlossen werden. Das zweite gegenüberliegende Ende des zentralen Schafts ist in einem Aufnahmebehälter gelagert. Am Schaft sind in einem unteren Bereich radial abstehende Klingen befestigt und in einem oberen Bereich können zusätzliche Bearbeitungswerkzeuge lösbar angeordnet werden. Beim Bearbeiten der Lebensmittel sind die zusätzlichen Bearbeitungswerkzeuge fest an den zentralen Schaft gekoppelt. In bestimmten Ausführungsformen ist der zentrale Schaft mit einer Spiralnut versehen, in die entsprechende Nocken der zusätzlichen Bearbeitungswerkzeuge eingreifen und beim Drehen des zentralen Schachtes in einer Abwärtsbewegung in eine Verriegelungsposition gebracht werden.

Aus der JP 2011 045411 bzw. der US 2012/0125207 A1 ist eine Brotbackmaschine bekannt. Diese Maschine umfasst einen Container, welcher mit den Zutaten befüllt und einen Backraum in welchen der Container eingesetzt wird. Des weiteren weisst dieser Container einen Rotationsschaft auf, welcher dazu eingerichtet ist, ein Zerkleinerungsmesser und eine Klinge zum Mischen der Zutaten für das Brot, in eine rotierenden Bewegung zu versetzen. Die offenbarte Maschine wird mit einem Motor betrieben. Je nach Rotationsrichtung des Schaftes wird entweder die Mischklinge oder die Zerkleinungsklinge gedreht.

Aus der US 2009/045274 A1 ist ein handbetriebenes Schneidgerät zum Zerkleinern von Lebensmitteln bekannt. Das Gerät umfasst eine Schneideinheit, die in einem Deckel angeordnet ist und eine Schale in welcher das zu schneidende Gut bevorratet ist. Mittels eines handbetätigten Hebels, werden Schneidklingen der Schneideinheit in eine zu einander gegenläufige Drehbewegung versetzt und zerkleinern auf diese Weise Schneidgut, welches sich in der Schale befindet.

### DARSTELLUNG DER ERFINDUNG

Es ist eine Aufgabe der vorliegenden Erfindung einen Wirkeinsatz und ein Gerät zum Bearbeiten von Lebensmitteln mit einem solchen Wirkeinsatz zur Verfügung zu stellen, welche zumindest gewisse Nachteile des Standes der Technik vermeiden oder reduzieren. Es ist insbesondere eine Aufgabe der vorliegenden Erfindung einen Wirkeinsatz vorzuschlagen, welcher mit einer Vielzahl von Geräten zum Bearbeiten von Lebensmitteln mit unterschiedlichsten Antriebsmechanismen eingesetzt werden kann, das Risiko von Fehlfunktionen entscheidend verringert und die Variabilität der Bearbeitungsoptionen weiter erhöht. Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung mit den Zeichnungen hervor.

Die vorgenannten Aufgaben werden gelöst durch einen Wirkeinsatz für ein Gerät zum Bearbeiten von Lebensmitteln das eine, um eine Rotationsachse rotierend angetriebene Aufnahme für den Wirkeinsatz aufweist, an der der Wirkeinsatz mit einer Antriebsschnittstelle lösbar drehmomentschlüssig befestigbar ist und durch ein Gerät zum Bearbeiten von Lebensmitteln mit einem Wirkeinsatz gemäss der Erfindung.

Der Antrieb ist vorzugsweise ein manueller Antrieb, wie er aus dem Stand der Technik von gattungsgleichen Geräten zum Beispiel mit Kurbel-, Schnurzug-, Kniehebel- oder Brummkreisel-Antrieben bekannt ist. Die erfindungsgemässen Wirkeinsätze können aber auch in Geräten mit Elektroantrieb eingesetzt werden. Der Wirkeinsatz trägt mindestens ein Arbeitsmittel, das von der Antriebsschnittstelle in eine Arbeitsrichtung drehbeweglich antreibbar und durch einen Freilauf bei Umkehrung der Drehrichtung der Antriebsschnittstelle von dieser in Bezug auf die Drehbewegung entkoppelbar ist.

Vorzugsweise ist der Freilauf de Wirkeinsatzes ein Klemmrollen-Freilauf, ein Klemmkörper-Freilauf, ein Schlingfederfreilauf, ein Sperrklinkenfreilauf oder ein Sperrkörperfreilauf.

Letzterer hat sich als vorteilhaft erwiesen, da er mit einem Minimum an beweglichen Teilen auskommt und einfach und kostengünstig hergestellt und montiert werden kann. Gleichzeitig stellt er aber sicher, dass die vom Antrieb auf den Wirkeinsatz und schlussendlich auf die Arbeitsmittel zu übertragenen Kräfte sicher übertragen werden und bei der Rückdrehbewegung, das heisst bei der Drehung gegen die Arbeitsrichtung, zuverlässig entkoppelt wird.

In bevorzugten Ausführungsformen umfasst der Sperrkörperfreilauf ein stirnseitig verzahntes Kupplungsteil und ein Mitnehmerteil, wobei das Kupplungsteil zwischen der Antriebsschnittstelle und dem Mitnehmerteil angeordnet und entlang einer Tragachse in eine Sperrposition verschiebbar ist. Das Kupplungsteil, die Antriebsschnittstelle und das Mitnehmerteil sind derart eingerichtet, dass in der Sperrposition eine Drehmomentübertragung zwischen der Antriebsschnittstelle und dem Mitnehmerteil erfolgt, wobei Koppelmittel eingerichtet sind, um bei Drehung der Antriebsschnittstelle in Arbeitsrichtung eine Verschiebung des Kupplungsteils in die Sperrposition zu bewirken und um bei Drehung der Antriebsschnittstelle entgegen der Arbeitsrichtung die Verschiebung des Kupplungsteils aus der Sperrposition freizugeben.

Der Wirkeinsatz ist gemäss weiterer bevorzugter Ausführungsformen mit einem Freilauf versehen, bei dem jeweils eine korrespondierende stirnseitige Sperrverzahnung am Mitnehmerteil und am Kupplungsteil angebracht ist, die mehrere angeschrägte Rampen aufweisen, welche zusammen bewirken, dass bei einer Drehung der Antriebsschnittstelle entgegen der Arbeitsrichtung eine Verdrehung zwischen dem Kupplungsteil und dem Mitnehmerteil zu einer axialen Verschiebung des Kupplungsteils aus der Sperrposition in eine Freigabeposition führt.

Die Koppelmittel umfassen Federelemente oder an der Antriebsschnittstelle und am Kupplungsteil angeordnete korrespondierende ineinander greifende angeschrägte Flächen, welche bewirken, dass bei der Drehung Antriebsschnittstelle in Arbeitsrichtung eine Verdrehung zwischen der Antriebsschnittstelle und dem Kupplungsteil zu einer axialen Verschiebung des Kupplungsteils in eine Sperrposition führt. Beim Einsatz eines Federelements, zum Beispiel einer Spiralfeder, wird das Kupplungsteil federkraftbeaufschlagt gegen den Mitnehmerteil, respektive in die korrespondierende Sperrverzahnung gedrückt. Die Drehmomentübertragung zwischen der Antriebsschnittstelle und dem Kupplungsteil kann durch eine drehmomentschlüssige axial verschiebbare Lagerung des Kupplungsteils an oder in der Antriebsschnittstelle erfolgen. Das Kupplungsteil kann mit einem Aussenmehrkant versehen und in einer entsprechenden formschlüssigen Aufnahmeöffnung in der Antriebsschnittstelle gelagert sein, oder es weist einen oder mehrere Radialnocken auf, die in entsprechende Vertikalnuten in einer Aufnahmeöffnung der Antriebsschnittstelle eingreifen und die axiale verschiebbare verdrehsichere Lagerung bewirken. In weiteren Ausführungsformen ist die Antriebsschnittstelle in oder am Kupplungsteil gelagert und weist die entsprechenden Formschlussmittel auf.

Beim Einsatz eines federlosen drehrunden Koppelmittels gemäss einer weiteren bevorzugten Ausführungsform sind an der Antriebsschnittstelle und am Kupplungsteil jeweils mindestens ein, vorzugsweise eine Mehrzahl von Anschlägen angebracht, welche bei der Drehung in Arbeitsrichtung und gegen die Arbeitsrichtung der Antriebsschnittstelle eine Verdrehung zwischen der Antriebsschnittstelle und dem Kupplungsteil begrenzen und eine Drehmomentübertragung zwischen der Antriebsschnittstelle und dem Kupplungsteil bewirken.

Die Arbeitsmittel der erfindungsgemässen Wirkeinsätze umfassen vorzugsweise jeweils mindestens ein Schneid- oder Hack-Messer, einen Pürierflügel, einen Schälarm, einen Rührflügel, einen Auf- oder Abweiserflügel oder einen Knetfinger. Gemäss bevorzugter Ausführungsformen sind zwei bis sechs gleiche oder unterschiedliche Arbeitsmittel an einem Wirkeinsatz angeordnet. So lassen sich zum Beispiel äusserst vorteilhaft Auf- und Abweiserflügel unter und oberhalb von einer Mehrzahl von zum Beispiel zwei der drei Schneidmessern anordnen. In einer anderen bevorzugten Ausgestaltungsform umfasst der Wirkeinsatz axial beabstandet voneinander mehrere elastische Schälarme oder zwei Schneidmesser und zwei Pürierflügel.

Gemäss bevorzugter Ausführungsformen sind weitere Arbeitsmittel am Wirkeinsatz vorgesehen, die drehmomentschlüssig gesperrt an die Antriebsschnittstelle gekoppelt sind. Während die übrigen Arbeitsmittel durch den Freilauf bei der Drehbewebung der Antriebsschnittstelle gegen die Arbeitsrichtung von der Antriebsschnittstelle entkoppelt sind, machen diese weiteren Arbeitsmittel die Drehbewegungen der Antriebsschnittstelle in und gegen die Arbeitsrichtung zwangsläufig mit. Ein oberer Abweiser oder ein unterer Aufweiser können auf diese Weise gesperrt mit der Antriebsschnittstelle bei der Drehbewegung in Arbeitsrichtung das zu bearbeitende Material zurück in den Bereich der Arbeitsmittel, zum Beispiel der Messerklingen, fördern. Bei der Rückdrehung entgegen der Arbeitsrichtung können sie dazu genutzt werden anhaftende Reste von Boden und oder Deckel des Arbeitsbehälters zu kratzen, während die Messerklingen im Freilaufmodus die Rückdrehung nicht mitmachen.

Die erfindungsgemässen Wirkeinsätze lassen sich dergestalt ausbilden, dass der Freilauf das mindestens eine Arbeitsmittel bei der Drehbewegung der Antriebsschnittstelle entgegen der Arbeitsrichtung von dieser und dem mindestens einen weiteren Arbeitsmittel entkoppelt. Dergestalt lassen sich Wirkeinsätze realisieren, bei denen zum Beispiel ein erster unterer Rührflügel, der tief in das zu rührende Lebensmittel eintaucht, bei der Rückdrehbewegung entgegen der Arbeitsrichtung freigeschaltet wird, während ein oberer Rührflügel der direkt an die Antriebsschnittstelle gekoppelt ist, deren Drehbewegungen in und gegen die Arbeitsrichtung mitmacht.

Gemäss bevorzugter Ausführungsformen umfasst der erfindungsgemässe Wirkeinsatz eine Tragachse die mindestens ein Arbeitsmittel trägt, wobei die Tragachse von der Antriebsschnittstelle in eine Arbeitsrichtung drehbeweglich antreibbar ist und durch einen Freilauf bei Umkehrung der Drehrichtung der Antriebsschnittstelle von dieser in Bezug auf die Drehbewegung entkoppelbar ist.

Vorzugsweise ist mindestens ein auf einer Tragachse angeordnetes und in Umfangsrichtung der Tragachse wirkendes Arbeitsmittel relativ zu mindestens einem weiteren an der Tragachse angeordneten Arbeitsmittel innerhalb eines begrenzten Schwenkwinkels um die Tragachse schwenkbar, wobei die Arbeitsmittel vorzugsweise radial zur Tragachse ausgerichtet sind.

Gemäss bevorzugter Ausführungsformen ist der Freilauf schaltbar in und gegen die Arbeitsrichtung oder vollständig sperrbar.

Die Antriebsschnittstelle ist vorzugsweise als Antriebszapfen, besonders bevorzugt mit einem endständigen Aussenmehrkant zur Aufnahme in die korrespondierend geformte vom Antrieb rotierend angetriebene Aufnahme ausgebildet.

Die erfindungsgemässen Geräte zum Bearbeiten von Lebensmitteln umfassend einen Antrieb mit einer um eine Rotationsachse rotierend angetriebene Aufnahme, an der der Wirkeinsatz mittels einer Antriebsschnittstelle lösbar drehmomentschlüssig befestigbar ist, und einen Behälter zur Aufnahme der zu bearbeitenden Lebensmittel, in dem der Wirkeinsatz vorzugsweise mit einem der Antriebsschnittstelle gegenüberliegendem Ende gelagert ist. In weiteren Ausgestaltungsformen ist die Aufnahme als Spindel ausgebildet, auf die der Wirkeinsatz mit einer entsprechend angepassten Hohlzylinder- oder Hohlkegel-förmigen Antriebsschnittstelle lösbar befestigbar aufgesteckt wird.

Vorzugsweise wird das erfindungsgemässe Gerät zum Bearbeiten von Lebensmitteln einem manuell betätigbaren Kurbel-, Schnurzug-, Kniehebel- oder Brummkreisel-Antrieb angetrieben. Der Antrieb kann ein Übersetzungsgetriebe umfassen um die Drehzahl von der primären manuellen Antriebsbewegung an Kurbel, Schnurzug, Kniehebel oder Brummkreisel-Drücker zur Drehzahl der Aufnahme zu erhöhen.

Da bei den erfindungsgemässen Wirkeinsätzen die empfindlichen Arbeitsmittel bereits durch den Freilauf vor Beschädigungen bei Fehlmanipulationen, d.h. in erster Linie vor einer Drehung entgegen der vorgesehenen Arbeitsrichtung geschützt sind, kann bei den erfindungsgemässen Geräten auf einen Freilauf im Antrieb verzichtet werden.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: schematisch in einer Seitenansicht einen Wirkeinsatz in Form eines Schneidrotors mit zwei Schneidmessern;
- Fig. 2: den Schneidrotor gemäss Figur 1 in teilweise geschnittener Darstellung;
- Fig. 3: den Schneidrotor in einer Explosionsansicht, wobei eine ihm zusammen gebauten Zustand unter einem oberen Abweiser angeordnete Haltebüchse Rechts in Alleinstellung dargestellt ist;
- Fig. 4: eine Sicht auf einen Mitnehmer von oben;
- Fig. 5: den im Bereich eines Freilaufs längs geschnittenen Schneidrotor gemäss Figur 2 im gesperrten Zustand;
- Fig. 6: den im Bereich des Freilaufs längs geschnittenen Schneidrotor gemäss Figur 2 im Freilauf-Zustand, wobei sich das Kupplungsteil in Freigabeposition befindet;
- Fig. 7: schematisch in einer Seitenansicht einen Wirkeinsatz gemäss einer weiteren Ausführungsform der Erfindung in Form eines Schneidrotors mit einem oberen Abweiser und einem Schneidmesser;
- Fig. 8: schematisch in einer Seitenansicht einen Wirkeinsatz gemäss einer weiteren Ausführungsform der Erfindung in Form eines kombinierten Schneid- und Pürierrotors mit oberem Abweiser, zwei Schneidmessern und zwei Pürierflügeln;
- Fig. 9: eine Seitenansicht eines Wirkeinsatzes gemäss einer weiteren Ausführungsform der Erfindung in Form eines Schälrotors zum Knoblauchschälen; und
- Fig. 10: ein Kupplungsteil in einer Sicht von oben (Fig. 10a), von der Seite (Fig. 10b) und von unten (Fig. 10c);
- Fig. 11: zusammenwirkende Kopplungsmittel in Form einer geschnitten dargestellten Antriebsschnittstelle und einem korrespondierenden Kupplungsteil in einer Sicht von oben; und
- Fig. 12: ein Schleuderkörbchen gemäss dem Stand der Technik im Längsschnitt.

### WEG(E) ZUR AUSFÜHRUNG DER ERFINDUNG

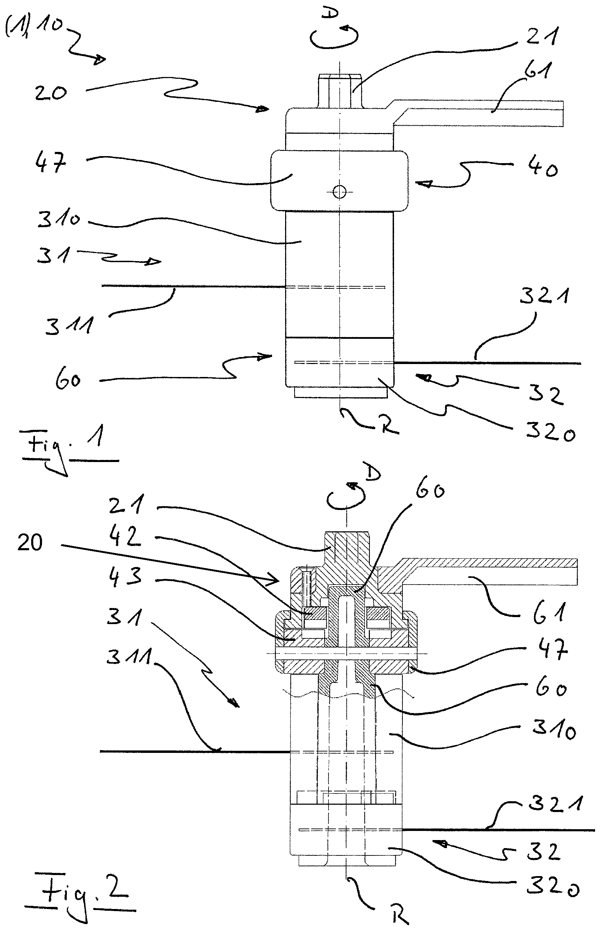

Figur 1 zeigt einen erfindungsgemässen Wirkeinsatz 1 in Form eines Schneidrotors 10 mit zwei in Radialrichtung annähernd waagerecht axial versetzt zueinander angeordneten Schneidmessern 31, 32, die jeweils einen zylindrischen Messerhalter 310, 320 vorzugsweise aus Kunststoff und eine Messerklinge 311, 321 umfassen. Während die beiden Schneidmesser 31, 32 am unteren Ende des Schneidrotors 10 an einer Tragachse 60 angeordnet sind, ist ein oberer Abweiser 61 an einer Antriebsschnittstelle 20 arretiert. Die Antriebsschnittstelle 20 umfasst einen oberseitigen Zapfen 21 mit einem Aussensechskant, der zur Einleitung des Drehmoments ausgebildet ist. Durch einen Freilauf 40, der in der Ausführungsform gemäss Figur 1 von einer Haltebüchse 47 und der Antriebsschnittstelle 20 vollständig aufgenommen ist, werden die Antriebsschnittstelle 20 und der obere Abweiser 61 bei der Drehung D in Arbeitsrichtung drehmomentschlüssig mit den beiden Messern 31, 32 gekoppelt. In diesem Betriebszustand drehen alle Arbeitsmittel 31, 32, 61 um dieselbe Rotationsachse R mit derselben Geschwindigkeit in dieselbe Richtung D.

Wird die Antriebsschnittstelle 20 entgegen der Arbeitsrichtung D gedreht, so trägt lediglich der obere Abweiser 61 mit ihr mit. Der Freilauf 40 entkoppelt diese Drehbewegung von den beiden Messern 31, 32 auf der Tragachse 60, so dass diese gebremst von an liegendem Schneidgut in einer Ruheposition verharren und die Drehbewegung entgegen der Arbeitsrichtung D nicht mitmachen.

Aus der teilweise geschnittenen Seitenansicht gemäss der Figur 2 ist der genaue Aufbau des Freilaufs 40 in einem Schneidrotor 10 gemäss der Ausführungsform von Figur 1 im Detail entnehmbar. Der Messerhalter 320 des unteren Messers 32 ist einstückig mit der zentralen Tragachse 60 ausgebildet. Auf diese Tragachse 60 ist der hohl zylindrische Messerhalter 310 des oberen Messers 31 aufgesteckt. Das obere Messer 31 ist durch Wirkmittel, wie sie aus der oben genannten US 2009/0090254 A1 bereits bekannt sind, begrenzt schwenkbeweglich an der Tragachse 60 gelagert und von einer Ruheposition um einen begrenzten Schwenkwinkel verschwenkbar in eine Arbeitsposition bringbar.

Gemäss weiterer bevorzugter Ausführungsformen, die nicht in der Abbildung dargestellt sind, sind beide Messer fix an der Tragachse angeordnet.

Bei beiden Ausgestaltungen bezüglich der Beweglichkeit der Schneidmesser 31, 32 ist die Tragachse 60 im oberen Bereich drehmomentsschlüssig mit einem Mitnehmerteil 43 verbunden, durchsetzt dieses und ragt nach oben ein Stück aus dem Mitnehmerteil 43 heraus. Ein Kupplungsteil 42 ist oben auf die Tagachse 60 frei drehbar aufgesteckt. Die Tragachse 60 durchsetzt auch das Kupplungsteil 42 und ragt mit ihrem freien oberen Ende in eine unterseitige kreiszylindrische Aufnahmeöffnung in der Antriebsschnittstelle 20. Durch die Haltebüchse 47 werden Antriebsschnittstelle 20 und Tragachse 60 in einer definierten axial Position gehalten und können axial nicht auseinander bewegt werden. Dazu hintergreift ein oberer Kragen der Haltebüchse 47 einen unteren peripheren Flansch an der Antriebsschnittstelle 20 der Art, dass ein reibungsarme Drehen um die Achse R ermöglicht, dass Verschieben in axialer Richtung aber verunmöglicht ist.

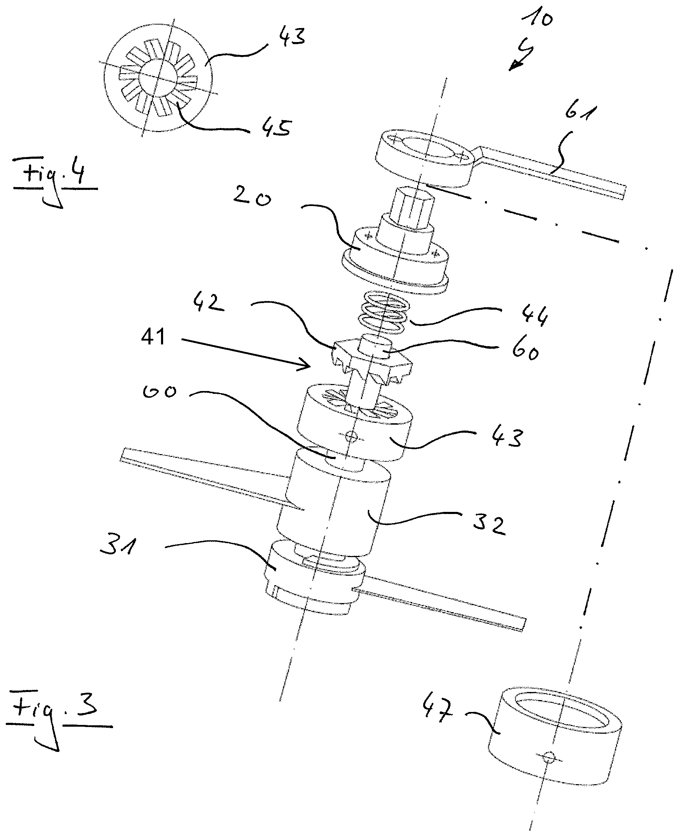

Der Aufbau eines Freilaufs gemäss einer bevorzugten Ausführungsform der vorliegenden Erfindung in Form eines Sperrkörperfreilaufs 41 ist in der Explosionsansicht von Figur 3 dargestellt. Der Sperrkörperfreilauf 41 umfasst ein stirnseitig verzahntes Kupplungsteil 42 und ein Mitnehmerteil 43, wobei das Kupplungsteil 42 zwischen der Antriebsschnittstelle 20 und dem Mitnehmerteil 43 angeordnet ist. Während das Mitnehmerteil 43 fest an der Tragachse 60 befestigt ist und weder radial noch axial in Bezug auf die Tragachse 60 bewegt werden kann, ist das Kupplungsteil 42 entlang der Tragachse 60 verschiebbar und um diese drehbar gelagert. Das Kupplungsteil 42, die Antriebsschnittstelle 20 und das Mitnehmerteil 43 sind derart eingerichtet, dass in einer Sperrposition die stirnseitige Verzahnung am Kupplungsteil 42 und am Mitnehmerteil 43 drehmomentschlüssig ineinander greifen und die Drehmomentübertragung zwischen der Antriebsschnittstelle 20 und dem Mitnehmerteil 43 erfolgt. Der Eingriff wird durch ein Koppelmittel in Form einer Spiralfeder 44 sichergestellt, die das axial bewegliche Kupplungsteil 42 in Richtung Mitnehmerteil 43 drückt.

Figur 4 zeigt eine Sicht auf den Mitnehmer von oben umfassend das Mitnehmerteil 43 und eine Rampe 45.

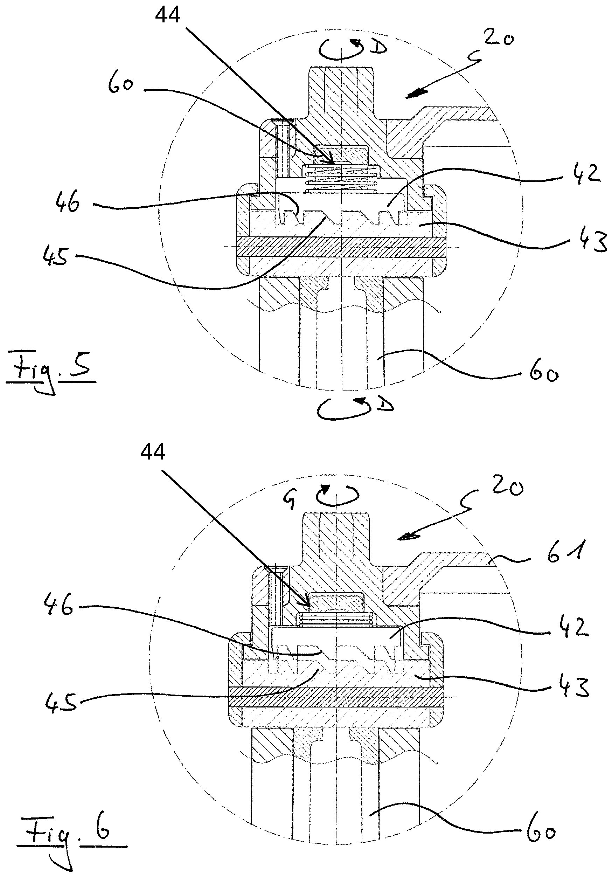

In der Figur 5 ist anhand einer Ausschnittsvergrösserug im Bereich des Freilaufs dargestellt, dass Kupplungsteil 42 und Mitnehmerteil 43 in der Eingriffs- oder Sperrposition mit den stirnseitigen Verzahnungen ineinander greifen und über axiale Sperrflächen das Drehmoment übertragen. Die Antriebsschnittstelle 20 und die über Kupplungsteil 42 und Mitnehmerteil 43 angekoppelte Tragachse 60 drehen in dieser Position in Arbeitsrichtung D. Bei der Drehung der Antriebsschnittstelle 20 entgegen der Arbeitsrichtung D werden Kupplungsteil 42 und Mitnehmerteil 43 durch eine Mehrzahl von zusammenwirkenden Rampen 45, 46 in axialer Richtung auseinander gedrückt. Da nur das Kupplungsteil 42 axial beweglich auf der Tragachse 60 gelagert ist, wird es gegen die Kraft der Feder 44 nach oben aus der Sperrposition in die in Figur 6 dargestellte Freigabeposition geschoben. Während Antriebsschnittstelle 20, oberer Abweiser 61 und Kupplungsteil 42 in Richtung G entgegen die Arbeitsrichtung D drehen, verbleiben die Tragachse 60 und die daran angeordneten Messer oder anderen Arbeitsmittel beim Anliegen einer externen Bremskraft in ihrer aktuellen Position und drehen nicht mit.

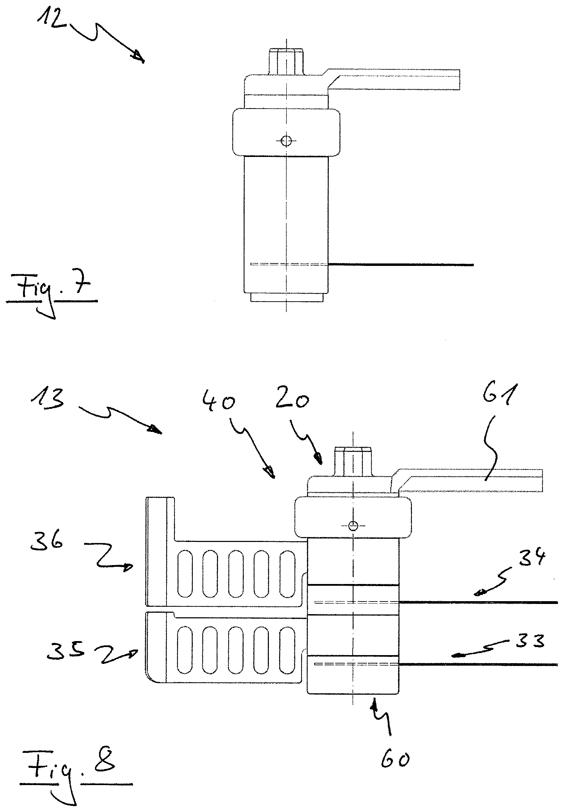

In der Figur 7 ist ein weiterer Wirkeinsatz in Form eines Schneidrotors 12 mit einem einzelnen Messer an einer Tragachse und einem oberen Abweiser an der Antriebsschnittstelle dargestellt.

In der Figur 8 ist ein weiterer Wirkeinsatz gemäss der vorliegenden Erfindung in Form eines Schneidrotors 13 mit zwei Messern 33, 34 und zwei Pürierflügeln 35, 36 dargestellt, die alle an einer Tragachse 60 angeordnet sind. Wie bereits zu Figur 2 als vorteilhafte Ausführungsform beschrieben, sind im dargestellten Beispiel das obere Messer 34 und beide Pürierflügel 35, 36 um jeweils einen beschränkten Schwenkwinkel um die Tragachse 60 und relativ zum fest an der Tragachse angeordneten unteren Messer 33 zwischen einer Ruheposition und einer Arbeitsposition verschwenkbar. Auf diese Weise lässt sich der Rotor 13 platzsparend lagern. Gemäss weiterer bevorzugter Ausführungsformen sind Messer und Pürierflügel jeweils abwechselnd und um 90° voneinander beabstandet fest an der Tagachse angeordnet. Bei beiden Ausführungsformen sind die Arbeitsmittel 33 - 36 und die Arbeitsachse 60 über den Freilauf 40 mit der Antriebsschnittstelle 20, die wiederum den oberen Abweiser 61 trägt, wirkverbunden.

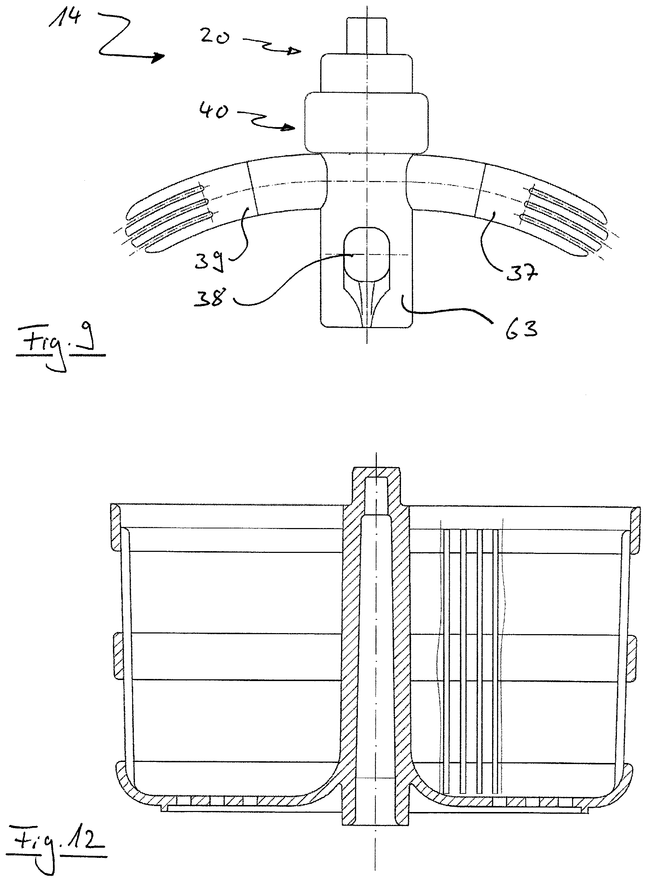

In der Figur 9 ist ein Wirkeinsatz gemäss einer weiteren bevorzugten Ausführungsform dargestellt, der als Schälrotor 14 vorzugsweise zum Schälen von Knoblauch ausgebildet ist. An einer Tragachse 63 sind drei elastische Schälarme 37, 38, 39 angeordnet, die wiederum über einen Freilauf 40 mit der Antriebsschnittstelle 20 verbunden sind.

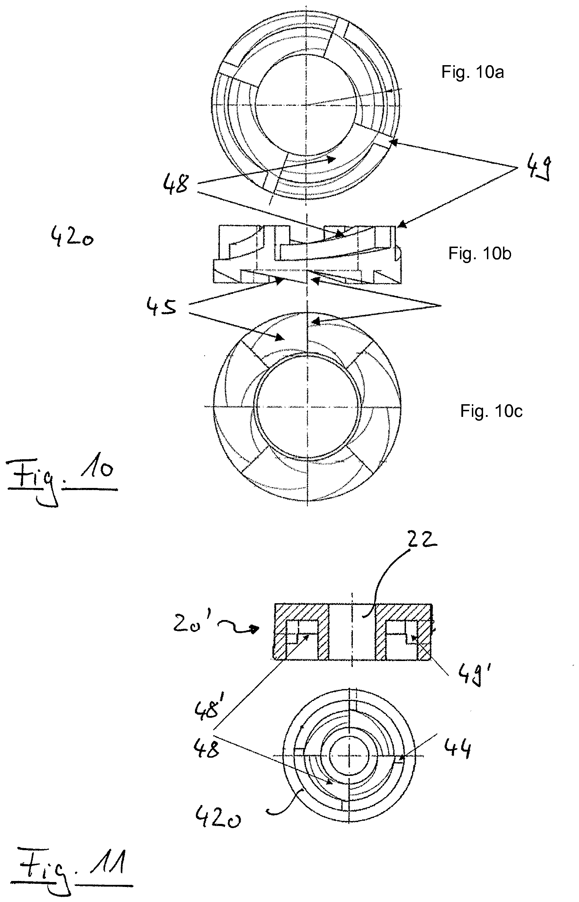

In der Figur 10 ist ein Kupplungsteil 420 gemäss einer weiteren Ausführungsform in einer Sicht von oben (Fig. 10a), von der Seite (Fig. 10b) und von unten (Fig. 10c) dargestellt. Beim dargestellten Kupplungsteil 420 ist ein Koppelmittel in Form einer Feder nicht mehr nötig. Das Kupplungsteil und die Antriebsschnittstelle wirken zum Koppeln und entkoppeln über die in der Figur 11 dargestellten korrespondierenden ineinander greifenden angeschrägten Flächen 48, 48' zusammen. Diese bewirken, dass bei der Drehung der Antriebsschnittstelle 20' in Arbeitsrichtung D eine Verdrehung zwischen der Antriebsschnittstelle 20' und dem Kupplungsteil 420 zu einer axialen Verschiebung des Kupplungsteils 420 in eine Sperrposition führt. Beim Einsatz des federlosen oberseitig am Kupplungsteil 420 angeformten drehrunden Koppelmittels 44 sind an der Antriebsschnittstelle 20' und am Kupplungsteil 420 jeweils vier korrespondierende axiale Anschläge 49, 49' angebracht, welche bei der Drehung D in Arbeitsrichtung und in Richtung G entgegen der Arbeitsrichtung der Antriebsschnittstelle 20' eine Verdrehung zwischen der Antriebsschnittstelle 20' und dem Kupplungsteil 420 auf etwa 90° begrenzen und eine Drehmomentübertragung zwischen der Antriebsschnittstelle 20' mit einem Innenmehrkant und dem Kupplungsteil 420 bewirken.

Da die erfindungsgemässen Wirkeinsätze über einen integrierten Freilauf verfügen ist es nicht mehr nötig, dass der Antrieb der erfindungsgemässen Geräte zum Bearbeiten von Lebensmitteln mit einem Freilauf ausgerüstet ist. Es können daher weitere, nicht erfindungsgemässe Arbeitsmittel, wie zum Beispiel das in der Figur 12 dargestellte Schleuderkörbchen vorteilhafter Weise mit den Geräten verwendet werden. Die Möglichkeit der Drehrichtungsumkehr verbessert das Schleuderergebnis ganz erheblich.

### LISTE DER BEZUGSZEICHEN

- 1: Gerät zum Bearbeiten von Lebensmitteln
- 2: Aufnahme
- 10: Wirkeinsatz
- 11: Wirkeinsatz, Schneidrotor mit zwei Messern
- 12: Schneidrotor mit einem Messer
- 13: Pürier- Schneidrotor
- 14: Schälrotor
- 20: Antriebsschnittstelle
- 21: Zapfen
- 22: Innenmehrkant
- 30: Arbeitsmittel
- 31: Schneidmesser
- 310: Messerhalter
- 311: Messerklinge
- 32: Schneidmesser
- 320: Messerhalter
- 321: Messerklinge
- 33: Schneidmesser
- 34: Schneidmesser
- 35: Pürierflügel
- 36: Pürierflügel
- 37-39: Schälarme
- 40: Freilauf
- 41: Sperrkörperfreilauf
- 42,420: Kupplungsteil
- 43: Mitnehmerteil
- 44: Koppelmittel, Federelement
- 45, 46: Rampe
- 47: Haltebüchse
- 48, 48': Schrägflächen
- 49, 49': Anschlag
- 50: weitere Arbeitsmittel
- 60: Tragachse
- 61: oberer Abweiser
- 62: unterer Abweiser
- 63: Tragachse

- R: Rotationsachse
- D: Drehung in Arbeitsrichtung
- G: Drehung entgegen der Arbeitsrichtung

## Patentansprüche

1. Ein Wirkeinsatz (10, 11, 12, 13, 14) für ein Gerät (1) zum Bearbeiten von Lebensmitteln das eine, um eine Rotationsachse (R) rotierend angetriebene Aufnahme für den Wirkeinsatz aufweist, an der der Wirkeinsatz (10, 11, 12, 13, 14) mit einer Antriebsschnittstelle (20) lösbar drehmomentschlüssig befestigbar ist, wobei der Wirkeinsatz (10, 11, 12, 13, 14) mindestens ein Arbeitsmittel (31-39) trägt, das von der Antriebsschnittstelle (20) in eine Arbeitsrichtung drehbeweglich antreibbar und durch einen Freilauf (40) bei einer Umkehrung der Drehrichtung der Antriebsschnittstelle (20) von dieser in Bezug auf die Drehbewegung entkoppelbar ist, **dadurch gekennzeichnet, dass** eine Tragachse (60) das mindestens eine Arbeitsmittel (31-39) trägt, wobei die Tragachse (60, 63) von der Antriebsschnittstelle (20) in eine Arbeitsrichtung drehbeweglich antreibbar und durch den Freilauf (40) bei Umkehrung der Drehrichtung der Antriebsschnittstelle (20) von dieser in Bezug auf die Drehbewegung entkoppelbar ist.

2. Wirkeinsatz (10, 11, 12, 13, 14) nach Anspruch 1, **dadurch gekennzeichnet, dass** der Freilauf (40) ein Klemmrollen-Freilauf, ein Klemmkörper-Freilauf, ein Schlingfederfreilauf, ein Sperrklinkenfreilauf oder ein Sperrkörperfreilauf (41) ist.

3. Wirkeinsatz (10, 11, 12, 13, 14) nach Anspruch 2, **dadurch gekennzeichnet, dass** der Sperrkörperfreilauf ein stirnseitig verzahntes Kupplungsteil (42) und ein Mitnehmerteil (43) umfasst, wobei das Kupplungsteil (42) zwischen der Antriebsschnittstelle (20) und dem Mitnehmerteil (43) angeordnet und in eine Sperrposition verschiebbar ist, wobei das Kupplungsteil (42), die Antriebsschnittstelle (20) und das Mitnehmerteil (43) eingerichtet sind, dass in der Sperrposition eine Drehmomentübertragung zwischen der Antriebsschnittstelle (20) und dem Mitnehmerteil (43) erfolgt, wobei Koppelmittel (44) eingerichtet sind, um bei Drehung der Antriebsschnittstelle (20) in Arbeitsrichtung eine Verschiebung des Kupplungsteils (42) in die Sperrposition zu bewirken und um bei Drehung der Antriebsschnittstelle (20) entgegen der Arbeitsrichtung die Verschiebung des Kupplungsteils (42) aus der Sperrposition in eine Freigabeposition zu bewirken.

4. Wirkeinsatz (10, 11, 12, 13, 14) nach Anspruch 3, **dadurch gekennzeichnet, dass** jeweils eine korrespondierende stirnseitige Sperrverzahnung am Mitnehmerteil (43) und am Kupplungsteil (42) angebracht ist, die mehrere angeschrägte Rampen (45, 46) aufweisen, welche zusammen bewirken, dass bei Drehung der Antriebsschnittstelle (20) entgegen der Arbeitsrichtung eine Verdrehung zwischen dem Kupplungsteil (42) und dem Mitnehmerteil (43) zu einer axialen Verschiebung des Kupplungsteils (42) aus der Sperrposition in eine Freigabeposition führt.

5. Wirkeinsatz (10, 11, 12, 13, 14) nach Anspruch 3 oder 4, **dadurch gekennzeichnet, dass** die Koppelmittel Federelemente (44) oder an der Antriebsschnittstelle (20) und am Kupplungsteil (42) angeordnete angeschrägte Flächen (48, 48') umfassen, welche bewirken, dass bei einer Drehung der Antriebsschnittstelle (20) in Arbeitsrichtung eine Verdrehung zwischen der Antriebsschnittstelle (20) und dem Kupplungsteil (42) zu einer axialen Verschiebung des Kupplungsteils (420) in die Sperrposition führt, wobei an der Antriebsschnittstelle (20) und am Kupplungsteil (42) mindestens ein Anschlag (49, 49') vorgesehen ist welcher bei der Drehung der Antriebsschnittstelle (20) in Arbeitsrichtung eine Verdrehung zwischen der Antriebsschnittstelle (20) und dem Kupplungsteil (42) begrenzt und eine Drehmomentübertragung zwischen der Antriebsschnittstelle (20) und dem Kupplungsteil (42) bewirkt.

6. Wirkeinsatz (10, 11, 12, 13, 14) nach einem der Ansprüche 1 bis 5, **dadurch gekennzeichnet, dass** das mindestens eine Arbeitsmittel (31-36) mindestens ein Messer (31 , 32, 33, 34), einen Pürierflügel (35, 36), einen Schälarm (37-39), einen Rührflügel oder einen Knetfinger umfasst.

7. Wirkeinsatz (10, 11, 12, 13, 14) nach einem der Ansprüche 1 bis 6, **dadurch gekennzeichnet, dass** weitere Arbeitsmittel (61) drehmomentschlüssig gesperrt an die Antriebsschnittstelle (20) gekoppelt sind.

8. Wirkeinsatz (10, 11, 12, 13) nach Anspruch 7, **dadurch gekennzeichnet, dass** der Freilauf (40) das mindestens eine Arbeitsmittel (31-36) bei der Drehbewegung der Antriebsschnittstelle (20) entgegen der Arbeitsrichtung von dieser und dem mindestens einen weiteren Arbeitsmittel (61) entkoppelt.

9. Wirkeinsatz (10, 11, 12, 13) nach Anspruch 1, **dadurch gekennzeichnet, dass** mindestens ein auf der Tragachse (60) angeordnetes und in Umfangsrichtung der Tragachse (60) wirkendes Arbeitsmittel (32-36) relativ zu mindestens einem weiteren Arbeitsmittel (31) innerhalb eines begrenzten Schwenkwinkels um die Tragachse (60) schwenkbar ist, wobei die Arbeitsmittel vorzugsweise radial zur Tragachse ausgerichtet sind.

10. Wirkeinsatz (10, 11, 12, 13, 14) nach einem der Ansprüche 1 bis 9, **dadurch gekennzeichnet, dass** der Freilauf ein schaltbarer und/ oder ein sperrbarer Freilauf ist.

11. Wirkeinsatz (10, 11, 12, 13, 14) nach einem der Ansprüche 1 bis 10, **dadurch gekennzeichnet, dass** die Antriebsschnittstelle (20) als Antriebszapfen (21), vorzugsweise mit einem endständigen Aussenmehrkant ausgebildet ist.

12. Gerät zum Bearbeiten von Lebensmitteln (1) umfassend einen Antrieb mit einer um eine Rotationsachse (R) rotierend angetriebene Aufnahme (2) für einen Wirkeinsatz (10, 11, 12, 13, 14) sowie einen Wirkeinsatz nach einem der vorangegangenen Ansprüche 1 bis 11, wobei der Wirkeinsatz (10, 11, 12, 13, 14) mit einer Antriebsschnittstelle (20) lösbar drehmomentschlüssig befestigbar ist, und einen Behälter zur Aufnahme der zu bearbeitenden Lebensmittel, in dem der Wirkeinsatz (10, 11, 12, 13, 14) vorzugsweise mit einem der Antriebsschnittstelle (20) gegenüberliegendem Ende gelagert ist.

13. Gerät zum Bearbeiten von Lebensmitteln (1) nach Anspruch 12, **dadurch gekennzeichnet, dass** der Antrieb ein manuell betätigbarer Kurbel-, Schnurzug-, Kniehebel- oder Brummkreisel-Antrieb ist.

## Claims

1. An operative insert (10, 11, 12, 13, 14) for a device (1) for processing foodstuffs, which has a receptacle for the operative insert which is driven in rotation about an axis of rotation (R) and to which the operative insert (10, 11, 12, 13, 14) can be releasably fastened in a torque-locking manner with a drive interface (20), wherein the operative insert (10, 11, 12, 13, 14) bears at least one working means (31-39), which can be driven rotatably in a working direction by the drive interface (20) and can be uncoupled therefrom in relation to the rotational movement by a freewheel (40) upon a reversal of the direction of rotation of the drive interface (20), **characterized in that** a support spindle (60) bears the at least one working means (31-39), wherein the support spindle (60, 63) can be driven rotatably in a working direction by the drive interface (20) and can be uncoupled therefrom in relation to the rotational movement by the freewheel (40) upon reversal of the direction of rotation of the drive interface (20).

2. Operative insert (10, 11, 12, 13, 14) according to Claim 1, **characterized in that** the freewheel (40) is a clamping roller freewheel, a clamping body freewheel, a wrap spring freewheel, a ratchet freewheel or a locking member freewheel (41).

3. Operative insert (10, 11, 12, 13, 14) according to Claim 2, **characterized in that** the locking member freewheel comprises a coupling part (42) toothed on the end face and a driver part (43), wherein the coupling part (42) is arranged between the drive interface (20) and the driver part (43) and is displaceable into a locking position, wherein the coupling part (42), the drive interface (20) and the driver part (43) are set up such that torque is transmitted between the drive interface (20) and the driver part (43) in the locking position, wherein coupling means (44) are set up in order to displace the coupling part (42) into the locking position upon rotation of the drive interface (20) in the working direction and in order to displace the coupling part (42) from the locking position into a release position upon rotation of the drive interface (20) counter to the working direction.

4. Operative insert (10, 11, 12, 13, 14) according to Claim 3, **characterized in that** a corresponding locking toothing is fitted at the end face in each case of the driver part (43) and of the coupling part (42), these locking toothings having a plurality of bevelled ramps (45, 46) which together have the effect that, upon rotation of the drive interface (20) counter to the working direction, a twisting movement between the coupling part (42) and the driver part (43) leads to axial displacement of the coupling part (42) from the locking position into a release position.

5. Operative insert (10, 11, 12, 13, 14) according to Claim 3 or 4, **characterized in that** the coupling means comprise spring elements (44) or bevelled surfaces (48, 48') arranged on the drive interface (20) and on the coupling part (42), which have the effect that, upon a rotation of the drive interface (20) in the working direction, a twisting movement between the drive interface (20) and the coupling part (42) leads to axial displacement of the coupling part (420) into the locking position, wherein at least one stop (49, 49') is provided on the drive interface (20) and on the coupling part (42) and, upon the rotation of the drive interface (20) in the working direction, limits a twisting movement between the drive interface (20) and the coupling part (42) and causes torque to be transmitted between the drive interface (20) and the coupling part (42).

6. Operative insert (10, 11, 12, 13, 14) according to one of Claims 1 to 5, **characterized in that** the at least one working means (31-36) comprises at least one knife (31, 32, 33, 34), a blending blade (35, 36), a peeling arm (37-39), a stirring blade or a kneading finger.

7. Operative insert (10, 11, 12, 13, 14) according to one of Claims 1 to 6, **characterized in that** further working means (61) are coupled locked to the drive interface (20) in a torque-locking manner.

8. Operative insert (10, 11, 12, 13) according to Claim 7, **characterized in that** the freewheel (40) uncouples the at least one working means (31-36) from the drive interface (20) and the at least one further working means (61) upon the rotational movement of said drive interface counter to the working direction.

9. Operative insert (10, 11, 12, 13) according to Claim 1, **characterized in that** at least one working means (32-36) arranged on the support spindle (60) and acting in the circumferential direction of the support spindle (60) is pivotable relative to at least one further working means (31) within a limited pivot angle about the support spindle (60), wherein the working means are preferably oriented radially in relation to the support spindle.

10. Operative insert (10, 11, 12, 13, 14) according to one of Claims 1 to 9, **characterized in that** the freewheel is a switchable and/or a lockable freewheel.

11. Operative insert (10, 11, 12, 13, 14) according to one of Claims 1 to 10, **characterized in that** the drive interface (20) is in the form of a drive spigot (21), preferably with a terminal external polygon.

12. Device for processing foodstuffs (1) comprising a drive, having a receptacle (2) for an operative insert (10, 11, 12, 13, 14) which is driven in rotation about an axis of rotation (R) and an operative insert according to one of the preceding Claims 1 to 11, wherein the operative insert (10, 11, 12, 13, 14) can be releasably fastened in a torque-locking manner with a drive interface (20), and a container for receiving the foodstuffs to be processed, in which the operative insert (10, 11, 12, 13, 14) is preferably mounted with an end lying opposite the drive interface (20).

13. Device for processing foodstuffs (1) according to Claim 12, **characterized in that** the drive is a manually operable crank drive, cord pull drive, toggle lever drive or humming top drive.

## Revendications

1. Insert actif (10, 11, 12, 13, 14) destiné à une unité (1) de traitement de produits alimentaires, laquelle comporte un logement destiné à l'insert actif et entraîné en rotation sur un axe de rotation (R) et à laquelle l'insert actif (10, 11, 12, 13, 14) peut être fixé par engagement de couple de manière amovible au moyen d'une interface d'entraînement (20), l'insert actif (10, 11, 12, 13, 14) portant au moins un moyen de travail (31 à 39) qui peut être entraîné en rotation dans un sens de travail par l'interface d'entraînement (20) et qui peut être découplé de celle-ci par rapport au mouvement de rotation par une roue libre (40) lors d'une inversion du sens de rotation de l'interface de travail (20), **caractérisé en ce qu'**un axe de support (60) porte l'au moins un moyen de travail (31 à 39), l'axe de support (60, 63) pouvant être entraîné en rotation dans un sens de travail par l'interface d'entraînement (20) et pouvant être découplé de celle-ci par rapport au mouvement de rotation par une roue libre (40) lors d'une inversion du sens de rotation de l'interface de travail (20).

2. Insert actif (10, 11, 12, 13, 14) selon la revendication 1, **caractérisé en ce que** la roue libre (40) est une roue libre à galet presseur, une roue libre à corps presseur, une roue libre à ressort enroulé, une roue libre à cliquet de blocage ou une roue libre à corps de blocage (41).

3. Insert actif (10, 11, 12, 13, 14) selon la revendication 2, **caractérisé en ce que** la roue libre à corps presseur comprend une partie d'accouplement à denture frontale (42) et une partie d'entraînement (43), la partie d'accouplement (42) étant disposée entre l'interface d'entraînement (20) et la partie d'entraînement (43) et pouvant coulissée jusque dans une position de blocage, la partie d'accouplement (42), l'interface d'entraînement (20) et la partie d'entraînement (43) étant adaptées de manière à effectuer, dans la position de blocage, une transmission de couple entre l'interface d'entraînement (20) et la partie d'entraînement (43), des moyens d'accouplement (44) étant adaptés pour provoquer, lors de la rotation de l'interface d'entraînement (20) dans le sens de travail, un coulissement de la partie d'accouplement (42) jusque dans la position de blocage et, lors de la rotation de l'interface d'entraînement (20) dans le sens opposé au sens de travail, le coulissement de la partie d'accouplement (42) de la position de blocage à une position de libération.

4. Insert actif (10, 11, 12, 13, 14) selon la revendication 3, **caractérisé en ce qu'**une denture de blocage frontale correspondante est montée sur chacune des partie d'entraînement (43) et partie d'accouplement (42), lesquelles comportent une pluralité de rampes biseautées (45, 46) qui ont conjointement pour effet que, lors de la rotation de l'interface d'entraînement (20) dans le sens opposé au sens de travail, une rotation entre la partie d'accouplement (42) et la partie d'entraînement (43) entraîne un coulissement axial de la partie d'accouplement (42) de la position de blocage à une position de libération.

5. Insert actif (10, 11, 12, 13, 14) selon la revendication 3 ou 4, **caractérisé en ce que** les moyens d'accouplement comportent des éléments à ressort (44) ou des surfaces biseautées (48, 48') qui sont disposées au niveau de l'interface d'entraînement (20) et de la partie d'accouplement (42) qui ont pour effet que, lors de la rotation de l'interface d'entraînement (20) dans le sens de travail, une rotation entre l'interface d'entraînement (20) et la partie d'accouplement (42) entraîne un coulissement axial de la partie d'accouplement (420) jusque dans la position de blocage, au moins une butée (49, 49') étant prévue au niveau de l'interface d'entraînement (20) et la partie d'accouplement (42), laquelle butée limite, lors de la rotation de l'interface d'entraînement (20) dans le sens de travail, une rotation entre l'interface d'entraînement (20) et la partie d'accouplement (42) et provoque une transmission de couple entre l'interface d'entraînement (20) et la partie d'accouplement (42).

6. Insert actif (10, 11, 12, 13, 14) selon l'une des revendications 1 à 5, **caractérisé en ce que** l'au moins un moyen de travail (31 à 36) comporte au moins un couteau (31, 32, 33, 34), une ailette de réduction en purée (35, 36), un bras d'épluchage (37 à 39), une ailette de mélange ou un doigt de pétrissage.

7. Insert actif (10, 11, 12, 13, 14) selon l'une des revendications 1 à 6, **caractérisé en ce que** d'autres moyens de travail (61) sont accouplés à l'interface d'entraînement (20) de manière bloquée du point de vue de l'engagement de couple.

8. Insert actif (10, 11, 12, 13) selon la revendication 7, **caractérisé en ce que** la roue libre (40) découple l'au moins un moyen de travail (31 à 36) lors du mouvement de rotation de l'interface d'entraînement (20) dans le sens opposé au sens de travail de celle-ci et de l'au moins un autre moyen de travail (61).

9. Insert actif (10, 11, 12, 13) selon la revendication 1, **caractérisé en ce qu'**au moins un moyen de travail (32 à 36), disposé sur l'axe de support (60) et agissant dans la direction périphérique de l'axe de support (60), peut pivoter sur l'axe de support (60) à l'intérieur d'un angle de pivotement limité par rapport à au moins un autre moyen de travail (31), les moyens de travail étant de préférence orientés radialement par rapport à l'arbre de support.

10. Insert actif (10, 11, 12, 13, 14) selon l'une des revendications 1 à 9, **caractérisé en ce que** la roue libre est une roue libre commutable et/ou une roue libre blocable.

11. Insert actif (10, 11, 12, 13, 14) selon l'une des revendications 1 à 10, **caractérisé en ce que** l'interface d'entraînement (20) est une broche d'entraînement (21), conçue de préférence avec un polygone d'extrémité extérieur.

12. Dispositif de traitement de produits alimentaires (1) comprenant un entraînement, pourvu d'un logement (2) entraîné en rotation sur un axe de rotation (R) et destiné à un insert actif (10, 11, 12, 13, 14), et un insert actif selon l'une des revendications précédentes 1 à 11, l'insert actif (10, 11, 12, 13, 14) pouvant être fixé par engagement de couple de manière amovible à une interface d'entraînement (20), et un récipient qui est destiné à recevoir des produits alimentaires à transformer et dans lequel l'insert actif (10, 11, 12, 13, 14) est monté de préférence par une extrémité opposée à l'interface d'entraînement (20).

13. Unité de traitement de produits alimentaires (1) selon la revendication 12, **caractérisée en ce que** l'entraînement est un entraînement du type à manivelle, à cordon de traction, à genouillère ou à bourdonnement-top.
